# EUROPEAN PATENT APPLICATION

(11) **EP 3 396 634 A1**
(43) Date of publication of application: **31.10.2018**
(21) Application number: 18166828.6
(22) Date of filing: 11.04.2018
(51) Int. Cl.: G06T 15/04, G06T 7/30

(54) **3D TEMPERATURE MAP CREATION**

(30) Priority: 26.04.2017 GB 201706612
(71) Applicant: Rolls-Royce plc, London SW1E 6AT (GB)
(72) Inventor: Pulisciano, Adriano, Derby, Derbyshire DE24 8BJ (GB); Watson, Graham, Derby, Derbyshire DE24 8BJ (GB); Knight, Steven, Derby, Derbyshire DE24 8BJ (GB)
(74) Representative: Rolls-Royce plc

(57) **Abstract**

A method is provided of creating a 3D temperature map of a component. The method includes the steps of: (a) providing plural shape models of the component corresponding to respective camera views of a 3D CAD model of the component; (b) providing plural images of the component captured after a thermal paint test, each image being a view of the component corresponding to a respective one of the shape models; (c) extracting data from each image by performing the sub-steps of: (c-i) adjusting the position and/or orientation of each shape model so that the camera view of the CAD model provided by that shape model matches the view of the component provided by the corresponding image, and (c-ii) identifying temperature bands within the images and encoding the temperature bands within the matched, corresponding shape models; and (d) forming a 3D temperature map of the component from the encoded temperature bands.

## Description

### Field of the Disclosure

The present disclosure relates to a method of creating a 3D temperature map of a component.

### Background of the Disclosure

Aerospace components are routinely tested to ensure that they meet the requirements and expectations of the design. Thermal paint is a temperature indicating paint which can be applied to aerospace components before testing. The thermal paint records a permanent colour change based on the maximum temperature that it experiences, and so provides an effective way of obtaining a visual record of the surface temperature of components. It is desirable to digitise this information in order to build a temperature map of the component in the form of a 3D computer model.

In known methods of building temperature maps, key colour change points between temperature bands after thermal paint testing are highlighted by manual chalking of the part by a skilled operator to create isotherm contour lines. Once these isotherms have been identified, they can be digitised by capturing digital images and encoding the temperature information with the images. The digitised result can then be used for design and thermal model validation activities. However, the digitisation process is manually-intensive and time consuming, typically leading to substantial delays between test completion and interpretation of the results.

In an example of a known digitisation process, each tested component is photographed *n* times from different views after the isotherm contour lines have been chalked to give *n* images of each component, where *n* may vary depending on the size and/or shape of the tested component. For example, *n ≈* 7 for a turbine blade.

When photographing each component it is important that images of similar views for different components are aligned to within 1 or 2 pixels for the digitisation process. This is done so that subsequent temperature mapping to a 3D model can be performed on all components following the manual selection of key 3D features on one image of each view. The alignment is checked manually, and if there is a misalignment the component is repositioned and the photograph retaken. Thus achieving the level of precision required is time-consuming.

A captured image is then viewed in image-editing software (e.g. Adobe™ Photoshop™) where the isotherm contour lines are manually retraced to ensure that each temperature band between isotherms can be segmented later in the process without error. In particular, breaks in the isotherm contour lines can cause neighbouring temperature band regions to merge during the segmentation and labelling process. Each temperature band is then labelled, and the image encoded with the temperature data.

This process is repeated for each of the n images of each component. Once images encoded with the temperature data have been created for each component, the images can be imported to another software program (e.g. Theorem Solutions™ SC03 STEP CADverter™) where the images are mapped to a 3D CAD model of the component using key feature lock points (i.e. points defined by the real-world x, y, and z coordinates of a specific pixel) which are located manually on one image of each view. This forms a composite 3D digital representation of the temperature map of the component for subsequent use.

The present disclosure seeks to avoid disadvantages associated with known methods of building temperature maps.

### Summary of the Disclosure

In a first aspect, the present disclosure provides a method of creating a 3D temperature map of a component, the method including the steps of:
(a) providing plural shape models of the component corresponding to respective camera views of a 3D CAD model of the component;
(b) providing plural images of the component captured after a thermal paint test, each image being a view of the component corresponding to a respective one of the shape models;
(c) extracting data from each image by performing the sub-steps of:
   (c-i) adjusting the position and/or orientation of each shape model so that the camera view of the CAD model provided by that shape model matches the view of the component provided by the corresponding image, and
   (c-ii) identifying temperature bands within the images and encoding the temperature bands within the matched, corresponding shape models; and
(d) forming a 3D temperature map of the component from the encoded temperature bands.

Advantageously, by adjusting the position and/or orientation of each shape model so that the camera view of the CAD model provided by that shape model matches the view of the component provided by the corresponding image it is possible to avoid the time-consuming stage of precisely aligning the images of the component to within 1 or 2 pixels for the digitisation process. For example, each shape model may define a reference pose corresponding to a given orientation of the CAD model in the respective camera view and a given camera distance from the CAD model. The orientation of the shape model may then be rotated in any direction within a given range (e.g. ±10°) from the reference pose, and/or the camera distance may be adjusted within a given range (e.g. ±25 mm) from the reference pose to match the camera view of the CAD model provided by the shape model to the view of the component provided by the corresponding image.

Further optional features of the disclosure will now be set out. These are applicable singly or in any combination.

Conveniently, the CAD model only needs to represent the external surface geometry of the component, i.e. internal features do not need to be represented in the model.

The component can be an aerofoil component (e.g. a blade or vane) of a gas turbine engine.

Steps (b) to (d) may be repeated for each of one or more further examples of the component. In this context, each blade or vane from a given circumferential row of blades or vanes of a gas turbine engine is substantially identical to the other blades or vanes of that row. Thus steps (b) to (d) can be repeated for further blades or vanes of a given row.

Conveniently, when steps (b) to (d) are repeated for plural examples of the component, the images of one of the examples of the component may be used to determine the reference poses of the shape models.

Step (c) may include a sub-step (c-iii) of identifying the positions of one or more lock points (i.e. the pixels corresponding to real-world x, y, and z coordinates) on the component within the images and encoding the lock points within the matched, corresponding shape models.

The 3D temperature map of the component may then be formed at step (d) from the encoded lock points as well as the encoded temperature bands.

The identifying of the temperature bands within the images at sub-step (c-ii) may conveniently be performed by identifying one or more isotherm contour lines within the images, each isotherm contour line separating different temperature bands. The isotherm contour lines identified within each image may be smoothed such that each isotherm contour line is continuous and has no breaks. For example, the isotherm contour lines can be smoothed using a Gaussian smoothing kernel. The isotherm contour lines may be drawn (e.g. hand drawn) on a given component after its thermal test but before the images of the component are captured.

The camera view of the CAD model provided by each shape model may be created by projecting the CAD model onto a respective 2D image plane.

The method may further include a preliminary step of capturing the images of the component using a camera. Before or after being used to capture the images, the camera may be calibrated, e.g. by taking one or more images of a standard calibration object. The camera calibration data may then be used to constrain the shape models so that the camera views provided by the shape models simulate the actual captured images.

Typically at least steps (a)-(d) of the method are computer-implemented. Thus they can be performed automatically and speedily. Indeed, further aspects of the present disclosure provide: a computer program comprising code which, when the code is executed on a computer, causes the computer to perform the method of the first aspect; a computer readable medium storing a computer program comprising code which, when the code is executed on a computer, causes the computer to perform the method of the first aspect; and a data processing system comprising one or more processors adapted to perform the method of the first aspect. For example, a data processing system can be provided for creating a 3D temperature map of a component; the system including a computer-readable medium storing (a) plural shape models of the component corresponding to respective camera views of a 3D CAD model of the component, and (b) plural images of the component captured after a thermal paint test, each image being a view of the component corresponding to a respective one of the shape models; and the system further including one or more processors operatively connected to the computer-readable medium to (c) extract data from each image by (c-i) adjusting the position and/or orientation of each shape model so that the camera view of the CAD model provided by that shape model matches the view of the component provided by the corresponding image, and (c-ii) identifying temperature bands within the images and encoding the temperature bands within the matched, corresponding shape models, and (d) form a 3D temperature map of the component from the encoded temperature bands. The system thus corresponds to the method of the first aspect. The system may further include: a display device for displaying any one or more of: the shape models, the captured images, the temperature bands, and the 3D temperature map.

### Brief Description of the Drawings

Embodiments of the disclosure will now be described by way of example with reference to the accompanying drawings in which:
Figure 1 shows a flow chart of a method of creating a 3D temperature map of a component according to an embodiment of the present disclosure.
Figure 2 shows schematically (A) a view of a CAD model (outline) superimposed on a reference image, (B) the CAD model aligned to the reference image, and (C) a screenshot summarising a reference pose.
Figure 3 shows an example of a shape model (outline) matched to a camera view.
Figure 4 shows extracted lock points located on the camera view of Figure 3.
Figure 5 shows an example of extracted contour lines enclosing coloured areas.
Figure 6 shows examples of (A) a visual check of FEA mesh alignment with image features, (B) a lock point encoding check, (C) a further lock point encoding check, and (D) a 3D temperature map displayed in an FEA application.
Figure 7 shows a schematic organisation chart for a modular computer system configured to perform the method of Figure 1.

### Detailed Description and Further Optional Features of the Disclosure

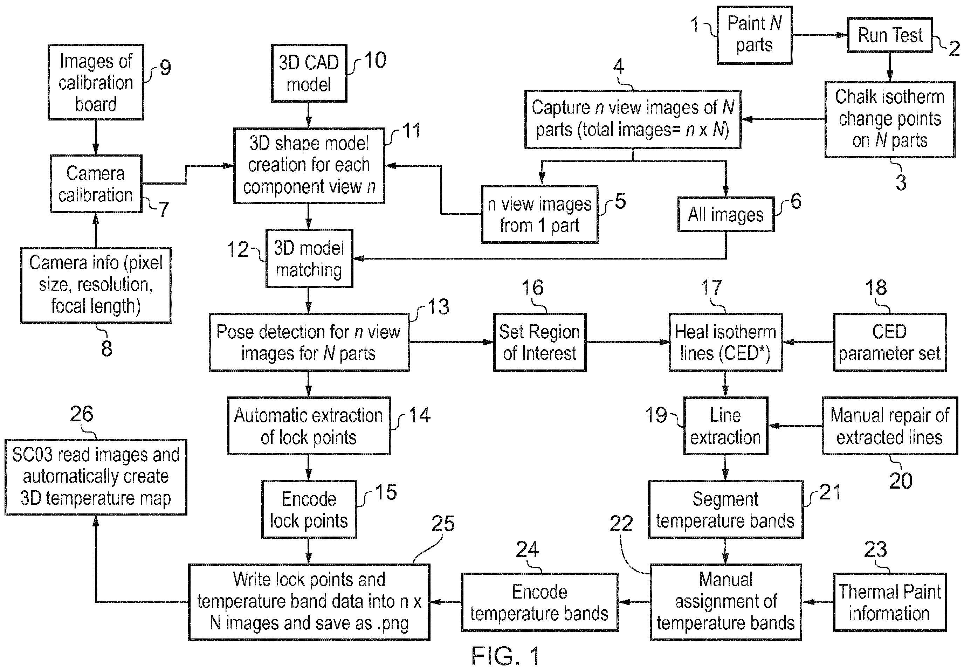

Figure 1 shows a flow chart of a method of creating a 3D temperature map of a component or part according to an embodiment of the present disclosure. The map can then be used for design and thermal model validation activities.

A number *N* (e.g. *N* = 100) of similar parts (e.g. blades or vanes of a gas turbine engine) are to be tested (e.g. in an engine or rig test) using thermal paint. Before the test, each of the parts is painted with a thermal paint (step 1). This paint records a permanent colour change based on the maximum temperature that it experiences.

The test is then run on the parts (step 2), and isotherm contour lines are drawn onto each part delineating the separation lines between two adjacent colours of the thermal paint (step 3). This can be done manually. The colour of the thermal paint in the temperature bands between contour lines is the information which is to be digitised as a 3D temperature map.

Photographs are taken of each of the *N* parts from a number *n* of views (step 4), the same *n* views being used for each part. Although, as discussed further below, the parts do not need to be highly accurately positioned relative to the camera that takes the photographs, the image capture procedure nonetheless establishes a series of typical views of the component which ensures that all regions of the part are captured in the images so that a comprehensive 3D temperature map can ultimately be created. Accordingly, each of the *N* parts is positioned in approximately the same position for each of the *n* views. The approximate positioning falls within bounds of a shape model pose range (discussed below). The number of views varies depending on the complexity of the component, but seven views generally provides appropriate coverage for aerofoil components of a gas turbine engine. The result of step 4 is therefore a total of (*n x N*) images.

Camera calibration (step 7) can be performed before or after the image capture of step 4. The intrinsic properties (e.g. focal length, pixel size, pixel resolution, principal point and radial distortion coefficient - step 8) of the camera are quantified so that image data and part positions can be transformed into world coordinates, and so that perspective issues and lens distortions can be corrected. Camera calibration is performed by taking images of a standard object such as a calibration board (step 9), the calibration board being e.g. an array of black dots on a white background. Ten to fifteen images of the calibration board may be taken to ensure that all parts of the camera field of view and the depth of field where the parts are placed are covered. If the camera optics are adjusted or the pixel resolution is windowed then the calibration should be repeated.

Respective shape models are created corresponding to the n views of the part (step 11). In particular, the camera calibration information from step 7, the set of n images of a first one of the parts (step 5), and a 3D CAD model of the part (step 10) can be used to create the shape models. Thus the set of *n* view images from the first part are known as reference images, with the position of the part in each image (defined e.g. by a given orientation of the part and a given camera distance of the part) being known as a reference pose.

Accordingly, each shape model provides a respective camera view of the 3D CAD model when the CAD model is in the given reference pose. However, each shape model also allows the position of the model to be varied within defined limits so that the camera view correspondingly changes. In this way, the *n* shape models created from the *n* view images of the first part, can be applied to all the parts, even if nominally identical views of different parts vary somewhat in orientation and camera distance.

The 3D CAD model may be in an STL format, which is a file format native to stereolithography CAD software. An STL file describes the surface geometry of a component without any representation of colour, texture, or other common CAD attributes. This is an efficient way of generating the shape models, as the CAD model represents only external surface geometry and does not contain internal detail such as cooling channels etc. Avoiding unnecessary detail, particularly in large shape models, can help to reduce computing times.

For each of the reference images, a shape model is generated by computing a virtual camera view of the 3D CAD model within a user-specified pose range, the camera calibration information from step 7 being used to set parameters for the virtual camera. The shape model view can be varied by repositioning the virtual camera around the CAD model and projecting the CAD model into the 2D image plane of the camera. Each shape model is thus created using a set of such views, so that for each view a 2D shape representation is stored in the shape model.

In principle, the virtual camera can be placed anywhere around the CAD model for each shape model, but this would be computationally inefficient due to the large number of views which would need to be obtained. Rather, for each shape model, the virtual camera is constrained to lie within a region which approximates to the range of positions occupied by the real camera relative to the part. This is known as the pose range. The position of the virtual camera relative to the CAD model for each view is thus always quite similar to the position of the real camera relative to the part. This facilitates automation of subsequent processes, and in particular the manual task of locating 3D lock points (discussed below) can be avoided.

Thus in practice, to create a shape model, the respective reference image is loaded and the superimposed CAD model is manually positioned over the reference image to obtain a good match. Once this has been done the shape model can be automatically created using the camera calibration properties (step 7) and by varying the virtual camera roll, virtual camera pitch and virtual camera yaw rotations within a range of e.g. ±10° from the reference pose and by varying the virtual camera distance within a range of e.g. ±25 mm from the reference pose. In this way each shape model is made tolerant to differences in position of all the parts for a given view.

The shapes models can be created using HALCON 12™ software from MVTec Software GmbH, which also includes a camera calibration operation (step 7). This software allows parameters to be controlled, such as the roll, pitch and yaw rotations, and the camera distance. Two other parameters that have an impact on the subsequent model matching process may be considered during the shape model creation. These are termed "MinFaceAngle" and "MinContrast". "MinFaceAngle" governs the level of edge detail in the CAD model that is used in the shape models. It is specified as an angle between 0° and 180° where 0° sets all of the present edge detail and 180° sets only the silhouette of the 3D CAD model. "MinContrast" sets a threshold on expected edge contrast gradients in an image and is specified as a dimensionless number between 2 and 20. A low "MinContrast" value can be set for good contrast images and hence allow smaller shape models to be created. It has been found that a "MinFaceAngle" of 60° and a "MinContrast" of 2 yields good results.

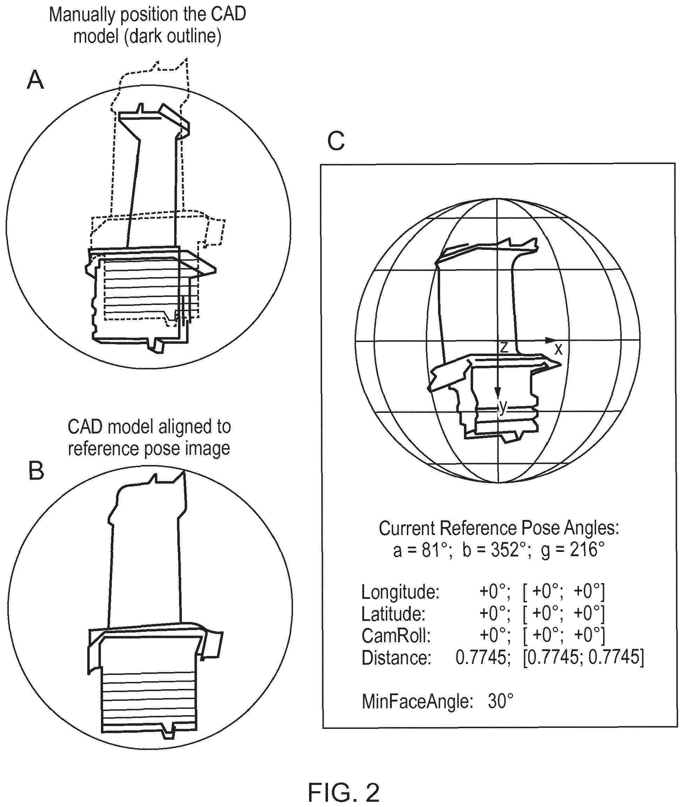

Figure 2 shows schematically (A) a view of a CAD model (outline) superimposed on a reference image, (B) the CAD model aligned to the reference image, and (C) a screenshot summarising a reference pose.

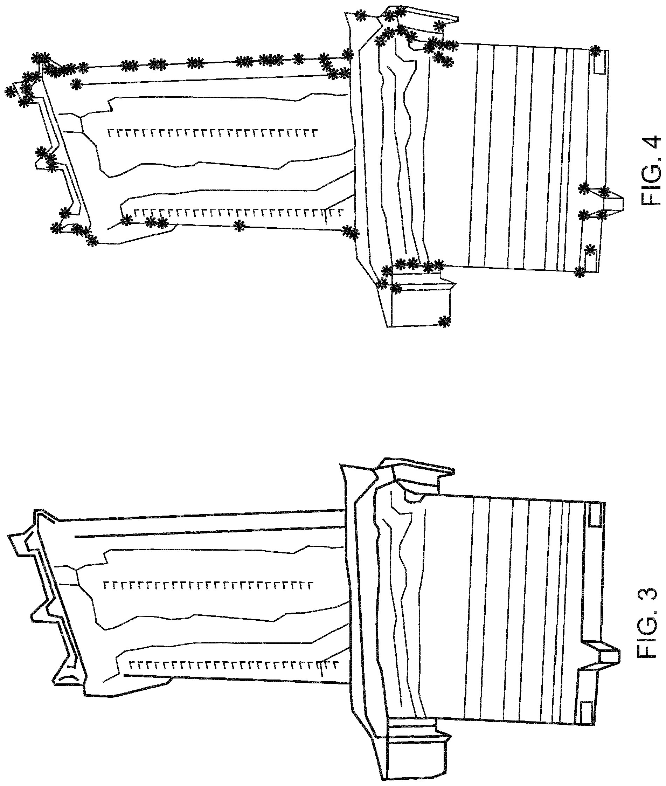

With the shape models created for each reference image, it is possible to execute a model matching routine (step 12) to locate the component in each of the (n x *N)* obtained images (Ulrich [1]). Again this can be performed using the HALCON 12™ software. The matching routine returns the position of the part (the pose information) in six degrees of freedom. By using a least-squares adjustment to minimise geometric distances in each image, the part position can be obtain to an accuracy of 0.12% with respect to the object distance, and an orientation accuracy of 0.35°. This finds the pose of the part for each of the *n* view images of the N parts (step 13). Figure 3 shows an example of a shape model (outline) matched to a camera view.

Once the part has been located within each image, lock point features can be automatically located and extracted (step 14). Lock points describe the real-world x, y, and z coordinates of a specific pixel, with respect to the origin of the CAD model coordinate system. These data can be used later for automatic mapping of the images to a 3D model. The number of lock points located is dependent on the value of "MinFaceAngle" which has been specified. Lower values of "MinFaceAngle" result in the locating of more lock points, giving a more accurate mapping process at the cost of increased processing time. Figure 4 shows extracted lock points located on the camera view of Figure 3.

When the lock points are extracted, the lock point data can be encoded within each image itself (step 15).

In parallel with the identification and extraction of lock points, temperature bands are located and encoded within the images. The steps to achieve this will now be described.

Initially, a region of interest in the image is set (step 16). This region of interest should be the location of the component, and so is set using the component location from step 13.

Next, the isotherm lines in the image, which are the contour lines drawn onto the component in step 3, are smoothed (step 17) by applying a coherence enhancing diffusion (CED) filter (step 18). This has the result of connecting non-continuous image edges (i.e. lines) by diffusion without smoothing the image that is perpendicular to their dominating direction.

An automatic line extraction process (step 19) then extracts the lines. Some elements of post-processing may be required in order to ignore certain features (e.g. letter markings on the part) and this can be followed by a manual interaction to rectify any errors in the automatic extraction (step 20).

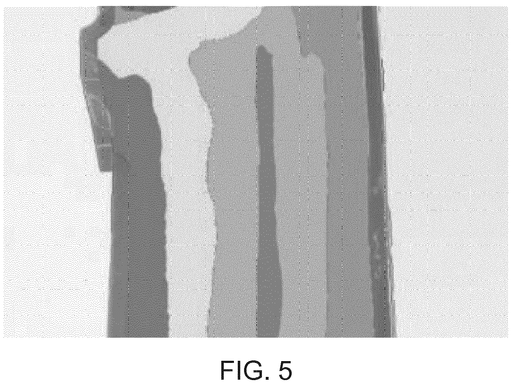

The automatic line extraction can be performed using the lines_gauss HALCON 12™ operator. This uses partial derivatives of a Gaussian smoothing kernel to determine the parameters of a quadratic polynomial in x and y for each point of the image. The parameters of the polynomial are used to calculate the line direction for each pixel. Pixels which exhibit a local maximum in the second derivative perpendicular to the line direction are marked as line points. The line points found in this manner are then linked to line contours (Steger [2]). Areas that are closed by extracted contour lines are processed as regions and assigned a random colour (step 21). Figure 5 shows an example of extracted contour lines enclosing coloured areas.

Next, the user labels the segmented temperature bands with the correct temperature (step 22), a thermal paint descriptor file (step 23) providing the data to do this. The temperature data can then be encoded within each image (step 24).

Thereafter, the (*n x N*) processed images are saved with all of their temperature data and 3D lock point data encoded within the images (step 25). For example, the images can be saved as four channel (RGBA) .png files.

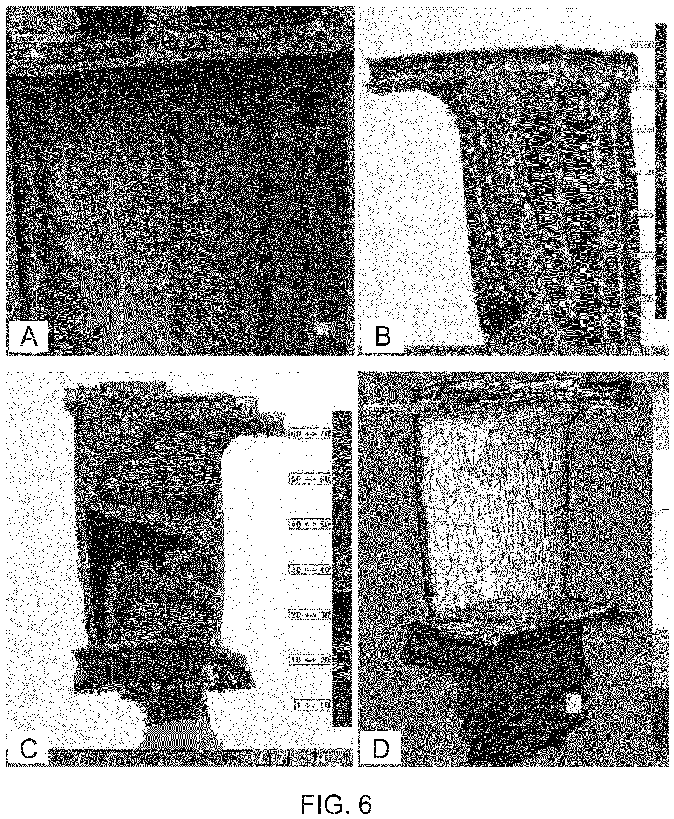

Finally, these images can be mapped (step 26) onto a model of the part, such as the mesh of a finite element analysis (FEA) application (e.g. SC03 developed by Rolls-Royce plc), thereby forming a 3D temperature map for subsequent modelling activities. Figure 6 shows examples of (A) a visual check of FEA mesh alignment with image features, (B) a lock point encoding check, (C) a further lock point encoding check, and (D) the 3D temperature map displayed in the FEA application.

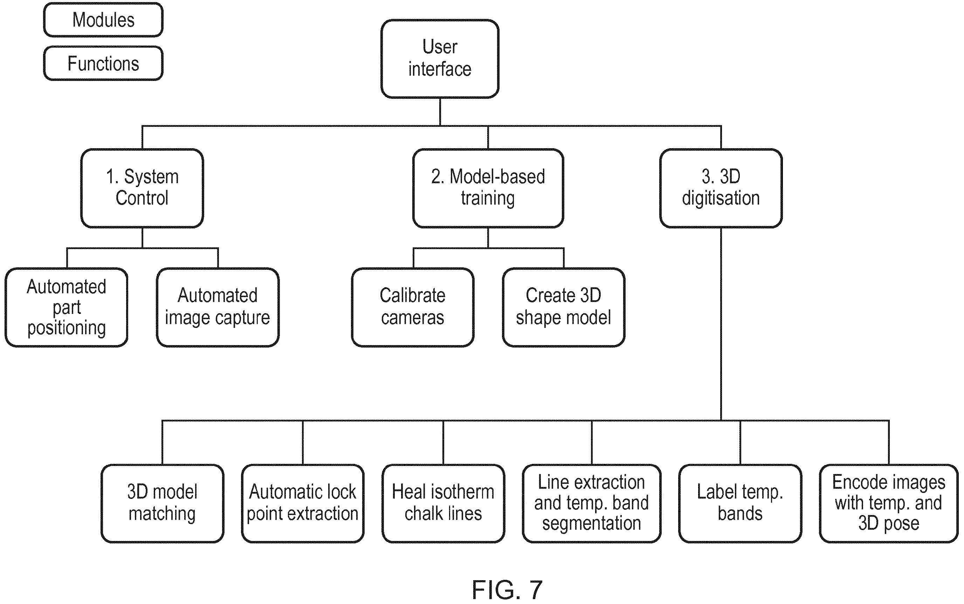

Figure 7 shows a schematic organisation chart for a modular computer system configured to perform the above-described method.

Module 1 (System Control) is concerned with automated part positioning, e.g. with a robot arm, and automated computer controlled image capture. However, as the method avoids a need for highly accurate part positioning, manual part positioning and image capture can be employed instead, avoiding a need for this part of the modular system.

A standard digital SLR camera, such as a Canon EOS 700D™, with e.g. an 8 MP resolution (3456 x 2304 pixels) can be employed for image capture. The camera optics are arranged so that the depth-of-field of the part being photographed is such that all edges are in focus.

Photographs can be taken with a white background behind the part to ensure high-contrast edges. Front lighting can also be arranged so as to remove shadowing.

Module 2 (Model-based training) performs the camera calibration and creates the shapes models. For calibration with a Canon EOS 700D™ camera, typical internal parameters of the camera are: focal length 66.7 mm, radial distortion 49.6, pixel width 6.35 µm, pixel height 6.36 µm, image centre width 1714.6 pixels, image centre height 1362.8 pixels Module 3 (3D digitisation) can be integrated into a single software tool and allows all the necessary parameter information to be loaded for the subsequent 3D digitisation steps. Required inputs typically include the component CAD model (STL format), the calibration parameter file, the created shape model, a component image to process and the specific thermal paint description text file that holds the calibrated temperature information.

Advantageously, the above-described method for creating a 3D temperature map can dramatically reduce the time it takes to perform thermal paint digitisation. In particular, the method uses a nominal geometric model of a part to be digitised to automatically determine the part's pose positions in images of the part. In this way positional accuracy requirements can be substantially relaxed when the images are captured, allowing e.g. the -700 images that are typically captured for a set of high-pressure turbine blades after a thermal paint test to be obtained with considerably less effort and in a reduced time frame. Hard coding of the 3D part position within the images can also change the way in which the thermal paint 3D mapping data are stored and accessed.

Embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

The term "computer readable medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a computer readable medium. One or more processors may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While the disclosure has been described in conjunction with the exemplary embodiments described above, many equivalent modifications and variations will be apparent to those skilled in the art when given this disclosure. Accordingly, the exemplary embodiments of the disclosure set forth above are considered to be illustrative and not limiting. Various changes to the described embodiments may be made without departing from the scope of the disclosure.

### References

All references are hereby incorporated by reference.
[1] Ulrich M. et al., Combining Scale-Space and Similarity-Based Aspect Graphs for Fast 3D Object Recognition. IEEE Pattern Analysis and Machine Intelligence, pp. 1902-1914, Vol. 34, No. 10, (2012).
[2] Steger, C., Extraction of Curved Lines from Images. 13th International Conference on Pattern Recognition, pp. 251-255, Vol. 2, (1996).

## Claims

1. A method of creating a 3D temperature map of a component, the method including the steps of:
(a) providing plural shape models of the component corresponding to respective camera views of a 3D CAD model of the component;
(b) providing plural images of the component captured after a thermal paint test, each image being a view of the component corresponding to a respective one of the shape models;
(c) extracting data from each image by performing the sub-steps of:
(c-i) adjusting the position and/or orientation of each shape model so that the camera view of the CAD model provided by that shape model matches the view of the component provided by the corresponding image, and
(c-ii) identifying temperature bands within the images and encoding the temperature bands within the matched, corresponding shape models; and
(d) forming a 3D temperature map of the component from the encoded temperature bands.

2. The method according to Claim 1, wherein each shape model defines a reference pose corresponding to a given orientation of the CAD model in the respective camera view and a given camera distance from the CAD model.

3. The method according to Claim 2, wherein each shape model further defines a limited range of rotations from the orientation of the reference pose and/or a limited variation in the camera distance from the reference pose.

4. The method according to any one of the previous claims, wherein steps (b) to (d) are repeated for each of one or more further examples of the component.

5. The method according to any one of the previous claims, wherein step (c) includes a further sub-step (c-iii) of identifying the positions of one or more lock points on the component within the images and encoding the lock points within the matched, corresponding shape models; and
the 3D temperature map of the component is formed at step (d) from the encoded lock points as well as the encoded temperature bands.

6. The method according to any one of the previous claims, wherein the identifying of the temperature bands within the images at sub-step (c-ii) is performed by identifying one or more isotherm contour lines within the images, each isotherm contour line separating different temperature bands.

7. The method according to any one of the previous claims, wherein the camera view of the CAD model provided by each shape model is created by projecting the CAD model onto a respective 2D image plane.

8. The method according to any one of the previous claims further including a preliminary step of capturing the images of the component using a camera.

9. The method according to Claim 6, wherein, before being used to capture the images, the camera is calibrated by taking one or more images of a standard calibration object.

10. The method according to any one of the previous claims, wherein the component is an aerofoil component of a gas turbine engine.

11. A computer program comprising code which, when the code is executed on a computer, causes the computer to perform the method of any one of Claims 1 to 10.

12. A computer readable medium storing a computer program comprising code which, when the code is executed on a computer, causes the computer to perform the method of any one of Claims 1 to 10.

13. A data processing system comprising one or more processors adapted to perform the method of any one of Claims 1 to 10.
